# EUROPEAN PATENT SPECIFICATION

(11) **EP 3 937 066 B1**
(45) Date of publication and mention of the grant of the patent: **29.10.2025**
(21) Application number: 20184491.7
(22) Date of filing: 07.07.2020
(51) Int. Cl.: G06V 20/58, G06V 10/82

(54) **PEER VEHICLE CENTER LINE DETERMINATION SYSTEM AND METHOD**
SYSTEM UND VERFAHREN ZUR BESTIMMUNG DER MITTELLINIE EINES PEER-FAHRZEUGS
SYSTÈME ET PROCÉDÉ DE DÉTERMINATION DE LIGNE CENTRALE DE VÉHICULES SIMILAIRES

(43) Date of publication of application: 12.01.2022
(73) Proprietor: KNORR-BREMSE Systeme für Nutzfahrzeuge GmbH, 80809 München (DE)
(72) Inventor: Karz, Gergely Jakab, Budapest H-1157 (HU); Boka, Jeno, 2120 Dunakeszi (HU); Dudas, Zsolt, 6728 Szeged (HU); Gyenis, Tamás, 1115 Budapest (HU); Gyurkó, Zoltán, 8771 Hahót (HU); Lindenmaier, Laszlo, 2040 Budaors (HU); Nemeth, Huba, 1116 Budapest (HU); Lóránt, Szabó, 6000 Kecskemét (HU); Szappanos, Andras, 2093 Budajeno (HU); Vörös, Dániel, 1039 Budapest (HU); Szöllosi, Adam, 1119 Budapest (HU)

(56) References cited:
- EP-A1- 2 482 268
- WO-A1-2020/133488
- US-A1- 2018 144 202

## Description

The invention relates to a control system for autonomous driving of a vehicle, in particular to a control system for autonomous driving of a transport vehicle, as e.g. a truck and trailer combination.

The autonomous operation of transport vehicles is a new field of inventions. Highly sophisticated functions require high-end hardware infrastructure including different types of sensors and perception technologies. Until now, SAE Automation level 2 systems require presence and attention of a driver. SAE Automation level 3 systems should manage autonomous driving without continuous attention of the driver. This requires interaction with peer vehicles.

Until now, in particular in the field of commercial vehicles and trucks, no satisfying solution or consideration which is able to handle such interaction situations and which is able to carry out minimal risk safety manoeuvre even in the environment of automated or man driven peer vehicles has been known.

Peer vehicle behaviour prediction and pre-emptive adaption to peer vehicle behaviour requires detailed information on the peer vehicle's position, in particular the peer vehicle's lane relative position. Different attempts have been made to determine the peer vehicle's lane relative position. According to one approach, the position of the peer vehicle was determined by a single shot object detector. A single shot detector is a method for detecting objects in pictures recorded by a forward facing camera of the autonomous vehicle by using a single neural network. Such single shot object detectors are easy to train and easy to integrate into systems like control systems for autonomous driving of a vehicle. However, position determination by single shot object detectors is not sufficiently accurate due to a lack of depth information of camera images and varying viewing angles of the peer vehicle.

Document US 2007 022 1822 A1 teaches a method of tail light detection using such conventional methods.

Document EP 2 482 268 A1 discloses that a vehicle periphery monitoring device is provided with a symmetrical image portion extraction unit which extracts from an image picked up by a camera, a first image portion and a second image portion which are line-symmetric to each other in the horizontal direction; an expanded region setting unit which sets a first expanded region which includes the first image portion; an expanded search range setting unit which sets an expanded search range , which is wider than the size of the first expanded region, including the second image portion; and an object class recognition unit which searches within the expanded search range for a second expanded region in which a correlation degree to a mirror reflection of the first expanded area is greater than or equal to a predetermined level, and when the second expanded region is found, recognizes the image containing the first image portion and the second image portion as the image of another vehicle. Thus disclosed is a control system for autonomous driving of a vehicle, configured to determine the center line of a peer vehicle comprising a sensor that is configured to record a pair of one and another symmetrical features of the peer vehicle that are symmetrical to a virtual center line of the peer vehicle and to provide input information, a symmetrical features detector means configured to extract spatial features of one symmetrical feature and the other symmetrical feature from the input information of the sensor, wherein the center line of the peer vehicle is determined to go through the average position between the extracted spatial features of the one symmetrical feature and the extracted spatial features of the other symmetrical feature.

Document US 2018/0144202 A1 discloses systems, methods, and devices for detecting brake lights. A system includes a mode component, a vehicle region component, and a classification component. The mode component is configured to select a night mode or day mode based on a pixel brightness in an image frame. The vehicle region component is configured to detect a region corresponding to a vehicle based on data from a range sensor when in a night mode or based on camera image data when in the day mode. The classification component is configured to classify a brake light of the vehicle as on or off based on image data in the region corresponding to the vehicle.

Document WO 2020/133488 A1 discloses a deep learning method for detecting vehicle lights in images.

Thus, no system and method is known providing a sufficiently accurate determination of a peer vehicle's lane relative position.

Therefore, the object underlying the invention is to enable a more accurate determination of a peer vehicle's position.

The object is achieved by a control system according to claim 1 and a control method according to claim 7. Advantageous further developments are subject-matter of the dependent claims.

The accurate determination of the peer vehicle's position can be based on tail light recognition of that vehicle and by a determination of the peer vehicle's center line based on the recognized tail lights.

Peer vehicles have symmetrical features that can be used to determine the peer vehicle's center line. A common feature representing such symmetrical features are the peer vehicle's tail lights. These can be seen on image sequences of a front facing camera providing a video stream. In autonomous vehicle systems, there are multiple sensors that map the environment of the autonomous vehicle. These sensors include LiDARs, cameras, thermal cameras, ultrasonic sensors or others. Optical cameras provide a video stream of the environment. On this video stream, objects can be detected e.g. using deep neural networks and conventional feature extracting models. Vehicle tail light recognition can be treated as an application of video acquisition and thus is susceptible to spatial image recognition. Such spatial image recognition is i.a. susceptible to deep learning approaches. As an example, it is proposed to provide a split artificial neural network architecture consisting of two parts, a feature extractor subnetwork and two symmetrical front or tail light detector branches. The feature extractor subnetwork is trained on bounding boxes annotating the tail lights on cropped images of peer vehicles and acts as a semantic segmentator and classifies each pixel in the input image. In this specific case, the semantic segmentator provides a heat map by determining a probability for each pixel in the input image that the given pixel is showing a tail light. The right front or tail light detector subnetwork and the left front or tail light detector subnetwork receive this heat map concatenated to the original input image. Using this input information, the right front or tail lights detector subnetwork and the left front or tail lights detector subnetwork determines a probability distribution over the width of the image for the inner edge of the right tail light and the left tail light. Under consideration of the highest probability peaks, from these distributions, a center line position of the peer vehicle is determined by averaging the respective positions of the highest probability peaks of the right front or light and the left front or tail light.

Disclosed is a control system for autonomous driving of a vehicle according to independent claim 1. The accurate peer vehicle center line detection enables accurate position measurement of the peer vehicle. Projecting e.g. the ground base point of the center line from pixel space of a camera sensor to the autonomous vehicle's coordinate-system gives the exact location of the peer vehicle, while if only a pixel region is available for the detected peer vehicle e.g. as a bounding box or segmentation mask, the peer vehicle's calculated position in the world remains vague.

The pair of symmetric features is a left tail light and a right tail light or a left front light and a right front light, wherein the extracted spatial features of the symmetrical features is an inner edge of the left tail light, the right tail light, the left front light or the right front light and the first symmetrical feature detector artificial neural network cell determines an inner edge of the left vehicle light, the second symmetrical feature detector artificial neural network cell determines an inner edge of the right vehicle light.

The sensor is a camera for visible or non-visible light and the input information is an image of a peer vehicle.

The spatial features extraction artificial neural network cell generates a heat map containing probability values for each pixel of the input image and the heat map is concatenated with the input image and used as input for the first symmetrical feature detector artificial neural network cell and the second symmetrical feature detector artificial neural network cell.

Preferably, the first symmetrical feature detector artificial neural network cell is configured to determine a probability distribution over the width of the input image for the spatial features of the one symmetrical feature, and the second symmetrical feature detector artificial neural network cell is configured to determine a probability distribution over the width of the input image for the spatial features of the other symmetrical feature.

Preferably, the at least one spatial features extraction artificial neural network cell is a convolutional neural network cell.

Preferably, the artificial neural network is a deep neural network, in particular an artificial neural network trained by deep learning mechanisms.

Disclosed is further a control method for autonomous driving of a vehicle according to independent claim 7.

The pair of symmetric features is a left tail light and a right tail light or a left front light and a right front light, wherein the extracted spatial features of the symmetrical features is an inner edge of the left tail light, the right tail light, the left front light or the right front light and the first symmetrical feature detection step determines an inner edge of the left vehicle light, the second symmetrical feature detection step determines an inner edge of the right vehicle light.

The sensor is a camera for visible or non-visible light and the input information is an image of a peer vehicle.

The spatial features extraction step generates a heat map containing probability values for each pixel of the input image and the heat map is concatenated with the input image and used as input for the first spatial features of symmetrical feature extraction step and the second spatial features of the symmetrical feature extraction step.

Preferably, the first spatial features of symmetrical feature extraction step determines a probability distribution over the width of the input image for the spatial features of the one symmetrical feature, and the second spatial features of symmetrical feature extraction step determines a probability distribution over the width of the input image for the spatial features of the other symmetrical feature.

Preferably, the at least one spatial features extraction artificial neural network cell is a convolutional neural network cell.

Preferably, the artificial neural network is a deep neural network, in particular an artificial neural network trained by deep learning mechanisms.

Below, the invention is elucidated by means of embodiments referring to the attached drawings.
Fig. 1 exhibits a vehicle including and implementing a first embodiment of the invention.
Fig. 2 exhibits a block diagram of an artificial neural network according to the invention.
Fig. 3 exhibits a flow chart of an embodiment according to the invention.
Fig. 4 exhibits input and output information for the artificial neural network according to Fig. 2.

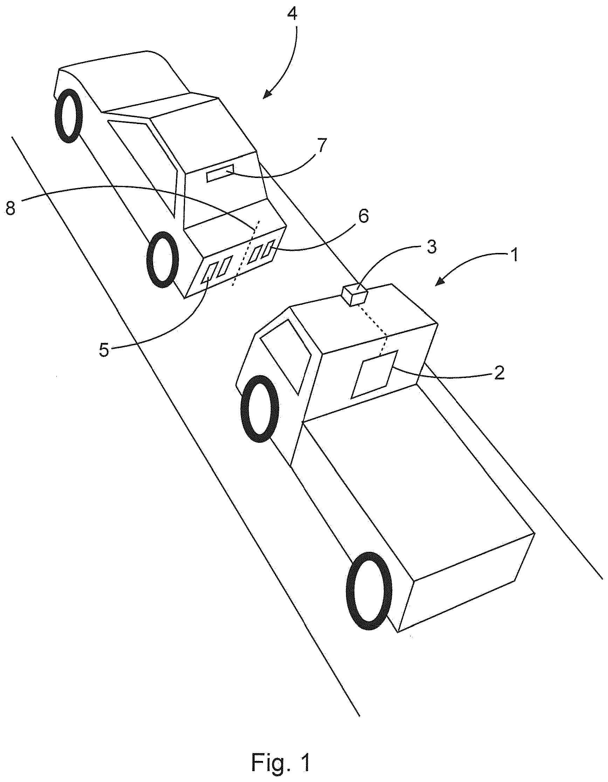

**Fig. 1** exhibits a vehicle 1 including a control system 2 according to the invention. In this embodiment, the vehicle 1 is a tractor of a trailer truck. However, any appropriate vehicle can be equipped with the control system 2.

The control system 2 is provided with an environment sensor architecture comprising a first sensor 3. In the embodiment, first sensor 3 is a visual light video camera directed towards the front of the vehicle 1. However, instead of a video camera, first sensor 3 may be embodied by any sensor that is capable of discerning a right and a left tail light of a leading vehicle like ir-cameras or other optical sensors. In the embodiment, the sensor 3 is a camera attached to the cabin of the vehicle 1. The first sensor 3 records the scene in front of the vehicle 1and is directed towards a leading peer vehicle 4 having a left tail light 5 and a right tail light 6. A dotted line in Fig. 1 represents a virtual center line 7 of the leading peer vehicle.

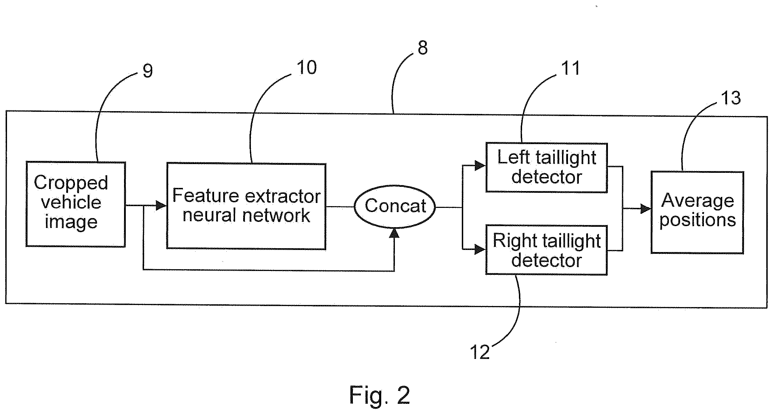

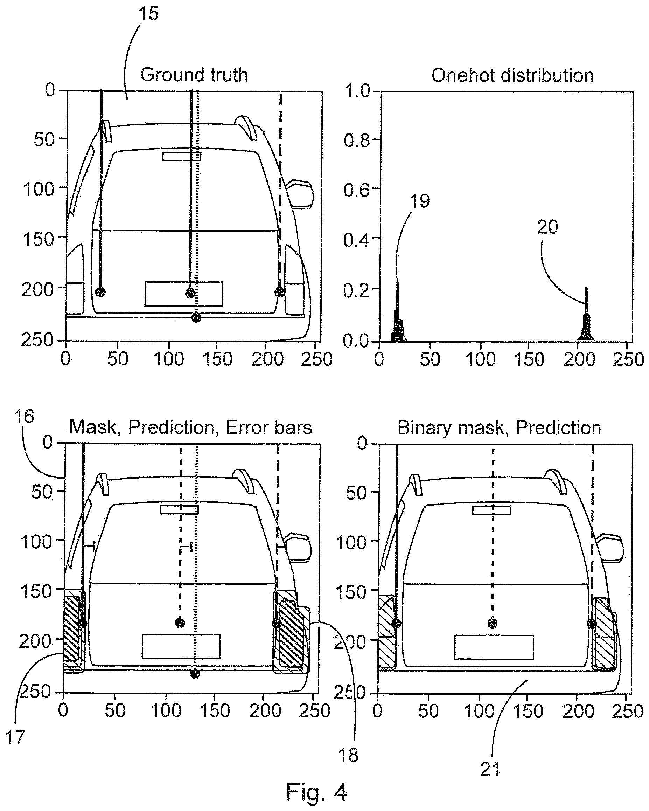

The control system 2 comprises an artificial neural network 8 corresponding to the block diagram of **Fig. 2****.** The artificial neural network 8 is of a split neural network architecture and contains several cells. The video stream recorded by the first sensor 3 is fed to a first convolutional neural network cell, specifically a cropped vehicle image 15 determination cell 9 as it can be seen in **Fig. 4** of a leading peer vehicle 4 . In the embodiment, a bounding box detector (YOLO - "you only look once" approach or region-based convolutional neural networks) detects peer vehicles from the video stream. Alternatively, a semantic segmentator can be used to detect peer vehicles from the video stream. The detected regions of the video stream containing a peer vehicle are cropped by using image processing techniques known in the art. The cropped vehicle image 15 as output of the first convolutional neural network cell 9 is fed to a second convolutional neural network cell, specifically a feature extractor neural network cell 10 that extracts the spatial features of the cropped vehicle image 15 to determine probabilities of positions of the leading peer vehicle's tail lights, i.e. the left turn light 5, and the right turn light 6. The feature extractor cell 10 is trained on bounding boxes annotating the tail lights on cropped images of peer vehicles and acts as a semantic segmentator and classifies each pixel in the input image. In this specific case, the semantic segmentator provides a heat map 16 by determining probabilities for each pixel in the input cropped vehicle image 15 that the given pixel is showing a tail light.

As it can be seen in **Fig. 4****.** the heat map 16 exhibits a left area 17 and a right area 18 of increased probability of pixels representing a back light The heat map 17 output of the feature extractor neural network cell 10 is concatenated with the cropped vehicle image 15 and fed to a left tail light detector cell 11 and a right tail light detector cell 12. The left tail light detector cell 11 determines a probability distribution 19 over the width of the cropped vehicle image 15 for the inner right edge of the left tail light 5. The right tail light detector cell 12 determines a probability distribution 20 over the width of the cropped vehicle image 15 for the inner left edge of the right tail light 6. The output of the left tail light detector cell 11 and the right tail light detector cell 12 are fed to an average position determination cell 13. The average position determination cell 13 may be implemented as a separate artificial neural network cell or may be implemented as an arithmetic unit and is configured to determine the average position of the left tail light's inner edge and the right tail light's inner edge. This average represents a peer vehicle's center line 21.

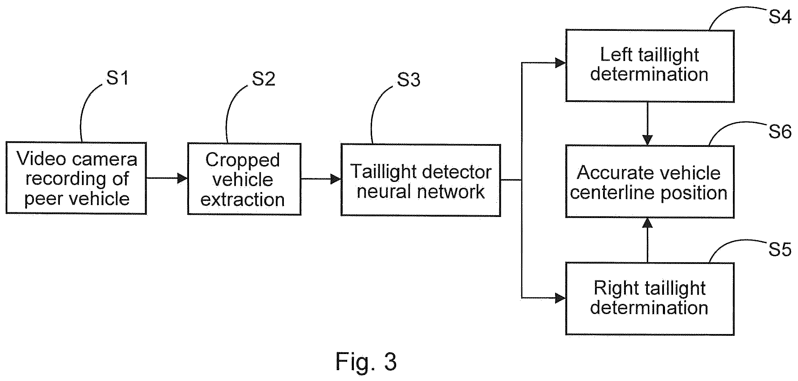

**Fig. 3** exhibits a flow chart of a method according to the invention. In a recording step S1, a video stream of the leading peer vehicle 4 is recorded by the first sensor 3.

In a cropped vehicle extraction step S2, a first video camera frame of the video stream is fed to the artificial neural network 8. In the first convolutional neural network cell 9, a cropped vehicle image of the leading peer vehicle is determined.

In a spatial feature extraction step S3, the cropped vehicle image is fed to the feature extraction neural network cell 10. In the feature extraction neural network cell 10, spatial features, i.e. the location of the back lights are extracted. Acting as the semantic segmentator, a heat map 16 is provided by determining probabilities for each pixel in the input cropped vehicle image 15 that the given pixel is showing a tail light.

In a left tail light detection step S4, the heat map 16 is concatenated with the cropped vehicle image 15 and fed to the left tail light detector cell 11 to determine the inner right edge of the left tail light 5. A probability distribution 19 over the width of the cropped vehicle image 15 for the inner edge of the left tail 5 light is generated.

In parallel to step S4, in a right tail light detection step S5, the heat map 16 is concatenated with the cropped vehicle image 15 and fed to the right tail light detector cell 12 to determine the inner left edge of the right tail light 6. A probability distribution 20 over the width of the cropped vehicle image 15 for the inner edge of the right tail light 6 is generated.

In an average tail light position determination step S6, the average position of the left tail light's inner edge and the right tail light's inner edge is determined and considered as the peer vehicle's center line. I.e. taking the highest probability peak from these distributions and averaging their respective positions, the center line position of the peer vehicle 5 is determined, relative to the detection bounding box.

The invention was described by means of an embodiment. The embodiment is only of explanatory nature and does not restrict the invention as defined by the claims. As recognizable by the skilled person, deviations from the embodiment are possible without deviating from the invention according to the scope of the claimed subject-matter.

In the above embodiment, the control system 2 is based on neural networks.

In the above embodiment, the neural network has a split architecture. However, this serves for improvements of the invention and the center line determination based on recognition of symmetrical features of the peer vehicle also can be achieved by applying a monolithic artificial neural network.

In the above embodiment, the center line determination is based on cropped peer vehicle images. It could also be achieved by algorithms that process an entire camera image frame potentially containing several peer vehicles providing center lines for all peer vehicles in a single shot manner.

In the above embodiment, the first sensor 3 is a front facing sensor observing a lead peer vehicle. In addition or instead, a second sensor 3' may be applied facing to the rear of the vehicle 1 to determine the indicator light state of a trailing peer vehicle. By that, the center line of a trailing peer vehicle may be recognized.

In this document, the term "center line" is meant to describe a hypothetical vertical line that represents the symmetrical center in a left-right direction of a vehicle's rear face or front face. It thus represents the projection of the vehicle's longitudinal vertical symmetry plane to the vehicle's rear face or front face.

In this document, the terms "and", "or" and "either ... or" are used as conjunctions in a meaning similar to the logical conjunctions "AND", "OR" (often also "and/or") or "XOR", respectively. In particular, in contrast to "either ... or", the term "or" also includes occurrence of both operands.

Method steps indicated in the description or the claims only serve an enumerative purpose of the required method steps. They only imply a given sequence or an order where their sequence or order is explicitly expressed or is - obvious for the skilled person - mandatory due to their nature. In particular, the listing of method steps do not imply that this listing is exhaustive.

In the claims, the word "comprising" does not exclude other elements or steps, and the indefinite article "a" or "an" does not exclude a plurality and has to be understood as "at least one".

### LIST OF REFERENCE SIGNS

- 1: vehicle
- 2: control system
- 3: first sensor
- 3': second sensor
- 4: peer vehicle
- 5: left tail light of peer vehicle
- 6: right tail light of peer vehicle
- 7: virtual center line of peer vehicle
- 8: artificial neural network
- 9: cropped vehicle image determination convolutional neural network cell
- 10: feature extractor neural network cell
- 11: left tail light detector neural network cell
- 12: right tail light detector neural network cell
- 15: cropped vehicle image
- 16: back light pixel probability heat map
- 17: left area of increased probability for tail light
- 18: right area of increased probability for tail light
- 19: left tail light probability distribution
- 20: right tail light probability distribution
- 21: binary back light pixel probability heat map.
- S1: recording step
- S2: cropped vehicle extraction step
- S3: spatial feature extraction step
- S4: left tail light detection step
- S5: right tail light detection step
- S6: average tail light position determination step

## Claims

1. A control system (2) for autonomous driving of a vehicle (1), configured to determine the center line (7) of a peer vehicle (4), the control system (2) comprising
a sensor (3) that is configured to record a pair of one and another symmetrical features (5, 6) of the peer vehicle (4) that are symmetrical to a virtual center line (7) of the peer vehicle (5) and to provide input information, said sensor being a camera for visible or non-visible light and input information is an image of a peer vehicle (4)
a symmetrical features detector means comprising an artificial neural network comprising a spatial features extraction artificial subnetwork (10) configured to extract spatial features of one symmetrical feature (5) and the other symmetrical feature (6) from the input information of the sensor and to generate a heat map (16) containing probability values for each pixel of the input image (15);
the pair of symmetric features is a left tail light (5) and a right tail light (6) or a left front light and a right front light,
the artificial neural network further comprises a left tail or front light detector subnetwork (11) configured to extract a left front or tail light from the heat map and a right front or tail light detector subnetwork (12) configured to extract a right front or tail light from the heat map; an average position determination means (13) to determine
the center line (7) of the peer vehicle by averaging positions of the extracted left front or tail light and the extracted right front or tail light.

2. The control system (2) according to the preceding claim, wherein
the artificial neural network has a split neural network architecture,
the at least one spatial features extraction artificial subnetwork (10) is a spatial features extraction artificial neural network cell,
the left front or tail light detector subnetwork (11) is a left front or tail light detector subnetwork artificial neural network cell, and
the right front or tail light detector subnetwork (12) is a right front or tail light detector subnetwork artificial neural network cell.

3. The control system (2) according to any of the preceding claims, wherein
wherein the extracted spatial features of the symmetrical features is an inner edge of the left tail light, of the right tail light, of the left front light or of the right front light, and
the left front or tail light detector subnetwork (11) determines an inner edge of the left vehicle light,
the right front or tail light detector subnetwork (12) determines an inner edge of the right vehicle light.

4. The control system (2) according to any of claims 2 or 3, wherein
the left front or tail light detector subnetwork (11) is configured to determine a probability distribution over the width of the input image (15) for the spatial features of the one symmetrical feature (5), and
the right front or tail light detector subnetwork (12) is configured to determine a probability distribution over the width of the input image (15) for the spatial features of the other symmetrical feature (6).

5. The control system (2) according to any of the preceding claims, wherein the at least one spatial features extraction artificial neural network cell (10) is a convolutional neural network cell.

6. The control system (2) according to any of the preceding claims, wherein artificial neural network (8) is a deep neural network, in particular an artificial neural network trained by deep learning mechanisms.

7. A control method for autonomous driving of a vehicle (1), the control method comprising the steps:
acquisition of information on a pair of one and another symmetrical features (5, 6) being the front or tail lights of a peer vehicle (4) by a sensor (3),
extracting a spatial feature of the one symmetrical feature,
extracting a spatial feature of the other symmetrical feature,
determining the position of center line (7) of the peer vehicle (4) by taking the average position between the extracted spatial features of the one front or tail light and the extracted spatial features of the other front or tail light,
providing the information acquired in the acquisition step as input information to an artificial neural network (8) having a split neural network architecture, and
extracting spatial features from the input information by a spatial features extraction artificial subnetwork (10), wherein
in the extraction step of the spatial feature of the one front or tail light, the extraction is made from the output of the extracting spatial features step in a left front or tail light detector subnetwork (11), and
in the extraction step of the spatial feature of the other front or tail light, the extraction is made from the output of the extracting spatial features step in a separate right front or tail light detector subnetwork (12),
in the acquisition step, a camera for visible or non-visible light as a sensor (3) acquires the information on the pair of front or tail lights, and
in the providing information step, an image (15) of a peer vehicle (4) is provided as input information, and
the spatial features extraction step generates a heat map (16) containing probability values for each pixel of the input image (15) that the given pixel is showing a front or tail light and the heat map is used as input for the first spatial features of symmetrical feature extraction step and the second spatial features of the symmetrical feature extraction step.

8. The control method according to any of the preceding method claims, wherein
wherein the extracted spatial features of the symmetrical features is an inner edge of the left tail light, of the right tail light, of the left front light or of the right front light and
the first symmetrical feature detection step determines an inner edge of the left vehicle light,
the second symmetrical feature detection step determines an inner edge of the right vehicle light.

9. The control method according to any of the preceding method claims, wherein
in the extracting a spatial features of the one symmetrical feature step, the spatial feature of the one symmetrical feature (5) is extracted from the output of the extracting spatial features step and the input information, and
in the extracting a spatial features of the other symmetrical feature step, the spatial feature of the one symmetrical feature (6) is extracted from the output of the extracting spatial features step and the input information.

10. The control method according to any of claims 7 or 8, wherein
the first spatial features of symmetrical feature extraction step determines a probability distribution over the width of the input image (15) for the spatial features of the one symmetrical feature (5), and
the second spatial features of symmetrical feature extraction step determines a probability distribution over the width of the input image (15) for the spatial features of the other symmetrical feature (6).

11. The control method according to any of the preceding method claims, wherein in the extracting spatial features step, the extraction is accomplished by a convolutional neural network cell as the at least one spatial features extraction artificial neural network cell (10).

12. The control method according to any of the preceding method claims, wherein the steps performed by the artificial neural network (8), are performed by a deep neural network, in particular an artificial neural network trained by deep learning mechanisms as the artificial neural network (8).

## Patentansprüche

1. Steuersystem (2) zum autonomen Fahren eines Fahrzeugs (1), das dazu konfiguriert ist, die Mittellinie (7) eines Peer-Fahrzeugs (4) zu bestimmen, wobei das Steuersystem (2) Folgendes umfasst:
einen Sensor (3), der dazu konfiguriert ist, ein Paar eines und eines anderen symmetrischen Merkmals (5, 6) des Peer-Fahrzeugs (4) aufzuzeichnen, die symmetrisch zu einer virtuellen Mittellinie (7) des Peer-Fahrzeugs (5) sind, und Eingangsinformationen bereitzustellen, wobei der Sensor eine Kamera für sichtbares oder nicht sichtbares Licht ist und Eingangsinformationen ein Bild eines Peer-Fahrzeugs (4) sind,
ein Detektormittel für symmetrische Merkmale, das ein künstliches neuronales Netzwerk umfasst, das ein künstliches Subnetzwerk (10) zur Extraktion räumlicher Merkmale umfasst, das dazu konfiguriert ist, räumliche Merkmale des einen symmetrischen Merkmals (5) und des anderen symmetrischen Merkmals (6) aus den Eingangsinformationen des Sensors zu extrahieren und eine Heatmap (16) zu erzeugen, die Wahrscheinlichkeitswerte für jedes Pixel des Eingangsbilds (15) enthält;
wobei das Paar symmetrischer Merkmale ein linkes Rücklicht (5) und ein rechtes Rücklicht (6) oder ein linkes Frontlicht und ein rechtes Frontlicht ist,
das künstliche neuronale Netzwerk weiter ein linkes Rücklicht- oder Frontlicht-Detektor-Subnetzwerk (11), das dazu konfiguriert ist, ein linkes Frontlicht oder Rücklicht aus der Heatmap zu extrahieren, und ein rechtes Frontlicht- oder Rücklicht-Detektor-Subnetzwerk (12) umfasst, das dazu konfiguriert ist, ein rechtes Frontlicht oder Rücklicht aus der Heatmap zu extrahieren; ein Mittel zum Bestimmen der durchschnittlichen Position (13), um
die Mittellinie (7) des Peer-Fahrzeugs durch Mitteln von Positionen des extrahierten linken Front- oder Rücklichts und des extrahierten rechten Front- oder Rücklichts zu bestimmen.

2. Steuersystem (2) nach einem vorstehenden Anspruch, wobei
das künstliche neuronale Netzwerk über eine geteilte neuronale Netzwerkarchitektur verfügt,
das mindestens eine künstliche Subnetzwerk (10) zur Extraktion räumlicher Merkmale eine künstliche neuronale Netzwerkzelle zur Extraktion räumlicher Merkmale ist,
das linke Front- oder Rücklichtdetektor-Subnetzwerk (11) eine künstliche neuronale Netzwerkzelle des linken Front- oder Rücklichtdetektor-Subnetzwerks ist und
das rechte Front- oder Rücklichtdetektor-Subnetzwerk (12) eine künstliche neuronale Netzwerkzelle des rechten Front- oder Rücklichtdetektor-Subnetzwerks ist.

3. Steuersystem (2) nach einem der vorstehenden Ansprüche, wobei
die extrahierten räumlichen Merkmale der symmetrischen Merkmale eine Innenkante des linken Rücklichts, des rechten Rücklichts, des linken Frontlichts oder des rechten Frontlichts sind und
das linke Front- oder Rücklichtdetektor-Subnetzwerk (11) eine Innenkante des linken Fahrzeuglichts bestimmt,
das rechte Front- oder Rücklichtdetektor-Subnetzwerk (12) eine Innenkante des rechten Fahrzeuglichts bestimmt.

4. Steuersystem (2) nach einem der Ansprüche 2 oder 3, wobei
das linke Front- oder Rücklichtdetektor-Subnetzwerk (11) dazu konfiguriert ist, eine Wahrscheinlichkeitsverteilung über die Breite des Eingabebildes (15) für die räumlichen Merkmale des einen symmetrischen Merkmals (5) zu bestimmen, und
das rechte Front- oder Rücklichtdetektor-Subnetzwerk (12) dazu konfiguriert ist, eine Wahrscheinlichkeitsverteilung über die Breite des Eingabebildes (15) für die räumlichen Merkmale des anderen symmetrischen Merkmals (6) zu bestimmen.

5. Steuersystem (2) nach einem der vorstehenden Ansprüche, wobei die mindestens eine künstliche neuronale Netzwerkzelle (10) zur Extraktion räumlicher Merkmale eine neuronale Faltungsnetzwerkzelle ist.

6. Steuersystem (2) nach einem der vorstehenden Ansprüche, wobei das künstliche neuronale Netzwerk (8) ein tiefes neuronales Netzwerk ist, insbesondere ein künstliches neuronales Netzwerk, das durch Deep-Learning-Mechanismen trainiert wurde.

7. Steuerverfahren zum autonomen Fahren eines Fahrzeugs (1), wobei das Steuerverfahren die Schritte umfasst von:
Erfassen von Informationen über ein Paar eines und eines anderen symmetrischen Merkmals (5, 6), nämlich die Front- oder Rücklichter eines Peer-Fahrzeugs (4), durch einen Sensor (3),
Extrahieren eines räumlichen Merkmals des einen symmetrischen Merkmals,
Extrahieren eines räumlichen Merkmals des anderen symmetrischen Merkmals,
Bestimmen der Position einer Mittellinie (7) des Peer-Fahrzeugs (4) durch Ermitteln der gemittelten Position zwischen den extrahierten räumlichen Merkmalen des einen Front- oder Rücklichts und den extrahierten räumlichen Merkmalen des anderen Front- oder Rücklichts,
Bereitstellen der im Erfassungsschritt erfassten Informationen als Eingangsinformationen für ein künstliches neuronales Netzwerk (8) mit einer geteilten neuronalen Netzwerkarchitektur und
Extrahieren räumlicher Merkmale aus den Eingabeinformationen durch ein künstliches Subnetzwerk (10) zur Extraktion räumlicher Merkmale, wobei
im Extraktionsschritt des räumlichen Merkmals des einen Front- oder Rücklichts die Extraktion aus der Ausgabe des Extraktionsschritts der räumlichen Merkmale in einem linken Front- oder Rücklicht-Detektor-Subnetzwerk (11) durchgeführt wird, und
im Extraktionsschritt des räumlichen Merkmals des anderen Front- oder Rücklichts die Extraktion aus der Ausgabe des Extraktionsschritts der räumlichen Merkmale in einem separaten rechten Front- oder Rücklicht-Detektor-Subnetzwerk (12) durchgeführt wird,
im Erfassungsschritt eine Kamera für sichtbares oder nicht sichtbares Licht als Sensor (3) die Informationen über das Paar Front- oder Rücklichter erfasst und
im Bereitstellungsschritt von Informationen ein Bild (15) eines Peer-Fahrzeugs (4) als Eingangsinformation bereitgestellt wird und
der Extraktionsschritt räumlicher Merkmale eine Heatmap (16) erzeugt, die für jedes Pixel des Eingabebildes (15) Wahrscheinlichkeitswerte dafür enthält, dass das gegebene Pixel ein Front- oder Rücklicht zeigt, und die Heatmap als Eingabe für die ersten räumlichen Merkmale des Extraktionsschritts symmetrischer Merkmale und die zweiten räumlichen Merkmale des Extraktionsschritts symmetrischer Merkmale verwendet wird.

8. Steuerverfahren nach einem der vorstehenden Verfahrensansprüche, wobei
die extrahierten räumlichen Merkmale der symmetrischen Merkmale eine Innenkante des linken Rücklichts, des rechten Rücklichts, des linken Frontlichts oder des rechten Frontlichts sind und
der Detektionsschritt des ersten symmetrischen Merkmals eine innere Kante des linken Fahrzeuglichts bestimmt,
der Detektionsschritt des zweiten symmetrischen Merkmals eine Innenkante des rechten Fahrzeuglichts bestimmt.

9. Steuerverfahren nach einem der vorstehenden Verfahrensansprüche, wobei
im Extraktionsschritt eines räumlichen Merkmals des einen symmetrischen Merkmals das räumliche Merkmal des einen symmetrischen Merkmals (5) aus der Ausgabe des Extraktionsschritts räumlicher Merkmale und den Eingabeinformationen extrahiert wird, und
im Extraktionsschritt eines räumlichen Merkmals des anderen symmetrischen Merkmals das räumliche Merkmal des anderen symmetrischen Merkmals (6) aus der Ausgabe des Extraktionsschritts räumlicher Merkmale und den Eingabeinformationen extrahiert wird.

10. Steuerverfahren nach einem der Ansprüche 7 oder 8, wobei
der Extraktionsschritt erster räumlicher Merkmale von symmetrischen Merkmalen eine Wahrscheinlichkeitsverteilung über die Breite des Eingabebildes (15) für die räumlichen Merkmale des einen symmetrischen Merkmals (5) bestimmt, und
der Extraktionsschritt zweiter räumlicher Merkmale von symmetrischen Merkmalen eine Wahrscheinlichkeitsverteilung über die Breite des Eingabebildes (15) für die räumlichen Merkmale des anderen symmetrischen Merkmals (6) bestimmt.

11. Steuerverfahren nach einem der vorstehenden Verfahrensansprüche, wobei im Extraktionsschritt räumlicher Merkmale die Extraktion durch eine neuronale Faltungsnetzwerkzelle als die mindestens eine künstliche neuronale Netzwerkzelle (10) zur Extraktion räumlicher Merkmale durchgeführt wird.

12. Steuerverfahren nach einem der vorstehenden Verfahrensansprüche, wobei die von dem künstlichen neuronalen Netzwerk (8) durchgeführten Schritte von einem tiefen neuronalen Netzwerk durchgeführt werden, insbesondere einem künstlichen neuronalen Netzwerk, das wie das künstliche neuronale Netzwerk (8) durch Deep-Learning-Mechanismen trainiert wurde.

## Revendications

1. Système de commande (2) pour la conduite autonome d'un véhicule (1), configuré pour déterminer la ligne centrale (7) d'un véhicule similaire (4), le système de commande (2) comprenant
un capteur (3) qui est configuré pour enregistrer une paire d'une et d'une autre caractéristiques symétriques (5, 6) du véhicule similaire (4) qui sont symétriques par rapport à une ligne centrale virtuelle (7) du véhicule similaire (5) et pour fournir des informations d'entrée, ledit capteur étant une caméra pour le feu visible ou non visible et les informations d'entrée sont une image d'un véhicule similaire (4)
un moyen de détecteur de caractéristiques symétriques comprenant un réseau neuronal artificiel comprenant un sous-réseau artificiel d'extraction de caractéristiques spatiales (10) configuré pour extraire des caractéristiques spatiales d'une caractéristique symétrique (5) et de l'autre caractéristique symétrique (6) à partir des informations d'entrée du capteur et pour générer une carte de chaleur (16) contenant des valeurs de probabilité pour chaque pixel de l'image d'entrée (15) ;
la paire de caractéristiques symétriques est un feu arrière gauche (5) et un feu arrière droit (6) ou un feu avant gauche et un feu avant droit,
le réseau neuronal artificiel comprend en outre un sous-réseau de détecteurs de feu avant ou arrière gauche (11) configuré pour extraire un feu avant ou arrière gauche de la carte de chaleur et un sous-réseau de détecteurs de feu avant ou arrière droit (12) configuré pour extraire un feu avant ou arrière droit de la carte de chaleur ; un moyen de détermination de position moyenne (13) pour déterminer
la ligne centrale (7) du véhicule similaire en faisant la moyenne des positions du feu avant ou arrière gauche extrait et du feu avant ou arrière droit extrait.

2. Système de commande (2) selon la revendication précédente, dans lequel :
le réseau neuronal artificiel présente une architecture de réseau neuronal divisée,
le au moins un sous-réseau artificiel d'extraction de caractéristiques spatiales (10) est une cellule de réseau neuronal artificiel d'extraction de caractéristiques spatiales,
le sous-réseau de détecteurs de feu avant ou arrière gauche (11) est une cellule de réseau neuronal artificiel de sous-réseau de détecteurs de feu avant ou arrière gauche, et
le sous-réseau de détecteurs de feu avant ou arrière droit (12) est une cellule de réseau neuronal artificiel de sous-réseau de détecteurs de feu avant ou arrière droit.

3. Système de commande (2) selon l'une quelconque des revendications précédentes, dans lequel :
dans lequel les caractéristiques spatiales extraites des caractéristiques symétriques sont un bord interne du feu arrière gauche, du feu arrière droit, du feu avant gauche ou du feu avant droit, et
le sous-réseau de détecteurs de feu avant ou arrière gauche (11) détermine un bord interne du feu gauche du véhicule,
le sous-réseau de détecteurs de feu avant ou arrière droit (12) détermine un bord interne du feu droit du véhicule.

4. Système de commande (2) selon l'une quelconque des revendications 2 ou 3, dans lequel :
le sous-réseau de détecteurs de feu avant ou arrière gauche (11) est configuré pour déterminer une distribution de probabilité sur la largeur de l'image d'entrée (15) pour les caractéristiques spatiales de la une caractéristique symétrique (5), et
le sous-réseau de détecteurs de feu avant ou arrière droit (12) est configuré pour déterminer une distribution de probabilité sur la largeur de l'image d'entrée (15) pour les caractéristiques spatiales de l'autre caractéristique symétrique (6).

5. Système de commande (2) selon l'une quelconque des revendications précédentes, dans lequel la au moins une cellule de réseau neuronal artificiel d'extraction de caractéristiques spatiales (10) est une cellule de réseau neuronal convolutif.

6. Système de commande (2) selon l'une quelconque des revendications précédentes, dans lequel le réseau neuronal artificiel (8) est un réseau neuronal profond, en particulier un réseau neuronal artificiel entraîné par des mécanismes d'apprentissage profond.

7. Procédé de commande pour la conduite autonome d'un véhicule (1), le procédé de commande comprenant les étapes consistant à :
obtenir des informations sur une paire d'une et d'une autre caractéristiques symétriques (5, 6) qui constituent les feux avant ou arrière d'un véhicule similaire (4) par un capteur (3),
extraire une caractéristique spatiale de la une caractéristique symétrique,
extraire une caractéristique spatiale de l'autre caractéristique symétrique,
déterminer la position de la ligne centrale (7) du véhicule similaire (4) en prenant la position moyenne entre les caractéristiques spatiales extraites d'un feu avant ou arrière et les caractéristiques spatiales extraites de l'autre feu avant ou arrière,
fournir les informations obtenues lors de l'étape d'obtention en tant qu'informations d'entrée à un réseau neuronal artificiel (8) présentant une architecture de réseau neuronal divisé, et
extraire des caractéristiques spatiales à partir des informations d'entrée par un sous-réseau artificiel d'extraction de caractéristiques spatiales (10), dans lequel
à l'étape d'extraction de la caractéristique spatiale du un feu avant ou arrière, l'extraction est réalisée à partir de la sortie de l'étape d'extraction de caractéristiques spatiales dans un sous-réseau de détecteurs de feu avant ou arrière gauche (11), et
à l'étape d'extraction de la caractéristique spatiale de l'autre feu avant ou arrière, l'extraction est réalisée à partir de la sortie de l'étape d'extraction de caractéristiques spatiales dans un sous-réseau de détecteurs de feu avant ou arrière droit distinct (12),
à l'étape d'obtention, une caméra pour le feu visible ou non visible en tant que capteur (3) obtient les informations sur la paire de feux avant ou arrière, et
à l'étape de fourniture d'informations, une image (15) d'un véhicule similaire (4) est fournie en tant qu'informations d'entrée, et
l'étape d'extraction de caractéristiques spatiales génère une carte de chaleur (16) contenant des valeurs de probabilité pour chaque pixel de l'image d'entrée (15) que le pixel donné montre un feu avant ou arrière et la carte de chaleur est utilisée comme entrée pour les premières caractéristiques spatiales de l'étape d'extraction de caractéristiques symétriques et les secondes caractéristiques spatiales de l'étape d'extraction de caractéristiques symétriques.

8. Procédé de commande selon l'une quelconque des revendications précédentes, dans lequel
dans lequel les caractéristiques spatiales extraites des caractéristiques symétriques sont un bord interne du feu arrière gauche, du feu arrière droit, du feu avant gauche ou du feu avant droit et
la première étape de détection de caractéristiques symétriques détermine un bord interne du feu gauche du véhicule,
la seconde étape de détection de caractéristiques symétriques détermine un bord interne du feu droit du véhicule.

9. Procédé de commande selon l'une quelconque des revendications précédentes, dans lequel
à l'étape d'extraction de la une caractéristique spatiale de la caractéristique symétrique, la caractéristique spatiale de la caractéristique symétrique (5) est extraite de la sortie de l'étape d'extraction de caractéristiques spatiales et des informations d'entrée, et
à l'étape d'extraction d'une caractéristique spatiale de l'autre caractéristique symétrique, la caractéristique spatiale de la une caractéristique symétrique (6) est extraite de la sortie de l'étape d'extraction de caractéristiques spatiales et des informations d'entrée.

10. Procédé de commande selon l'une quelconque des revendications 7 ou 8, dans lequel
la première étape d'extraction de caractéristiques spatiales de caractéristiques symétriques détermine une distribution de probabilité sur la largeur de l'image d'entrée (15) pour les caractéristiques spatiales de la une caractéristique symétrique (5), et
la seconde étape d'extraction de caractéristiques spatiales de caractéristiques symétriques détermine une distribution de probabilité sur la largeur de l'image d'entrée (15) pour les caractéristiques spatiales de l'autre caractéristique symétrique (6).

11. Procédé de commande selon l'une quelconque des revendications précédentes, dans lequel, à l'étape d'extraction de caractéristiques spatiales, l'extraction est réalisée par une cellule de réseau neuronal convolutif en tant que l'au moins une cellule de réseau neuronal artificiel d'extraction de caractéristiques spatiales (10).

12. Procédé de commande selon l'une quelconque des revendications précédentes, dans lequel les étapes réalisées par le réseau neuronal artificiel (8) sont réalisées par un réseau neuronal profond, en particulier un réseau neuronal artificiel entraîné par des mécanismes d'apprentissage profond comme le réseau neuronal artificiel (8).
